# EUROPÄISCHE PATENTSCHRIFT

(11) **EP 2 415 557 B1**
(45) Veröffentlichungstag und Bekanntmachung des Hinweises auf die Patenterteilung: **10.12.2014**
(21) Anmeldenummer: 11176496.5
(22) Anmeldetag: 03.08.2011
(51) Int. Cl.: B23Q 1/76, B24B 41/06

(54) **Vorrichtung und Verfahren zur Reduktion von einer Form- und/oder Lageabweichung, insbesondere einer Rundlaufabweichung eines Werkstücks**
Device and method for reducing deviations in shape and/or position, in particular the run out of a workpiece
Dispositif et procédé de réduction d'une déviation de forme et/ou de position, notamment d'une déviation de rotation d'une pièce usinée

(30) Priorität: 03.08.2010 AT 13012010
(43) Veröffentlichungstag der Anmeldung: 08.02.2012
(73) Patentinhaber: WFL Millturn Technologies GmbH & Co. KG, 4030 Linz (AT)
(72) Erfinder: Wimmer, Karl, 4048 Puchenau (AT)
(74) Vertreter: Jell, Friedrich

(56) Entgegenhaltungen:
- FR-A- 1 331 778
- FR-A1- 2 318 001
- GB-A- 1 142 939

## Beschreibung

Die Erfindung betrifft eine Werkzeugmaschine und ein Verfahren zur Reduktion von einer Form- und/oder Lageabweichung, insbesondere einer Rundlaufabweichung eines Werkstücks, bei dem das Werkstück in einer Werkzeugmaschine eingespannt, gedreht und über wenigstens eine Schale mindestens einer, an der Werkzeugmaschine befestigten Lünette abgestützt und über ein Werkzeug der Werkzeugmaschine unter einer wenigstens teilweisen Beaufschlagung von Kühlschmiermittel bearbeitet wird, wobei wenigstens beim Bearbeiten der Form-und/oder Lageabweichung des Werkstücks zwischen wenigstens einer Schale der Lünette und dem Werkstück eine Lagerflüssigkeit für eine zumindest teilweise hydrostatische Lagerung des Werkstücks eingebracht wird.

Um lange zylindrische Werkstücke bei deren Bearbeitung zur Reduktion einer Formabweichung (z.B.: Zylindrizität, Rundheit, etc.) und/oder einer Lageabweichung (z.B.: Rundlauf) positionsgenau abstützen zu können, ist es aus dem Stand der Technik bekannt (DE3909411A1), eine hydrostatische Lünette am Bett der Werkzeugmaschine vorzusehen, auf dem das Werkstück während seiner Bearbeitung lasten kann. Zu diesem Zweck wird zwischen einer Schale der Lünette und dem Werkstück eine Lagerflüssigkeit eingebracht, um dann das Werkstück unter Beaufschlagung von Kühlschmiermittel vom Werkzeug der Werkzeugmaschine zu bearbeiten. Nachteilig hat sich jedoch herausgestellt, dass trotz hydrostatischer Lagerung des Werkstücks mit zunehmender Bearbeitungsdauer eine Form- und/oder Lageabweichung nicht weiter vermindert werden kann. Derartige Werkzeugmaschinen können daher ein standfestes Verfahren zur Reduktion einer Form- und/oder Lageabweichung nicht gewährleisten.

Eine Werkzeugmaschine mit einer Lünette, die ein hydrostatisches Lager mit einem Ringkolben aufweist, ist aus der FR2318001A1 und der FR1331778A bekannt.

Die Erfindung hat sich daher die Aufgabe gestellt, ausgehend vom eingangs geschilderten Stand der Technik ein standfestes Verfahren zur Reduktion einer Form-und/oder Lageabweichung zu schaffen. Außerdem soll das Verfahren einfach bedienbar sein und zu Kostenvorteilen führen.

Die Erfindung löst die gestellte Aufgabe hinsichtlich des Verfahrens dadurch, dass wenigstens beim Bearbeiten der Form- und/oder Lageabweichung des Werkstücks eine Rückhalteeinrichtung zur Vermeidung einer Kontamination der Lagerflüssigkeit durch ein Vermischen mit Kühlschmiermittel vorgesehen wird, wobei diese Rückhalteeinrichtung wenigstens teilweise am Werkstück insbesondere über eine elastische Dichtung anliegt, am Träger der Lünette befestigt ist und wenigstens mit dem Träger eine das hydrostatische Lager umfassende Abschottung ausbildet.

Wird wenigstens beim Bearbeiten der Form- und/oder Lageabweichung des Werkstücks eine Rückhalteeinrichtung zur Vermeidung einer Kontamination der Lagerflüssigkeit durch das Kühlschmiermittel vorgesehen, dann können nicht nur die von einer berührungsloser Lagerung von Werkstücken bekannten Vorteile der präzisen Abstützung eines Werkstücks, sowie einer verminderten Gefahr von Lagerschäden am Werkstück genutzt werden, sondern es stellte sich auch überraschend heraus, dass damit alle Voraussetzungen für ein standfestes Verfahren zur Reduktion einer Form- und/oder Lageabweichung geschaffen werden können. Die Erfindung gelangte nämlich zur Erkenntnis, dass die hydrostatische Lagerung durch das erfindungsgemäße Schützen der Lagerflüssigkeit vom Kühlschmiermittel stets höchsten Anforderungen zur genauen Abstützung des Werkstücks folgen kann und so das Verfahren zur Reduktion der Form- und/oder Lageabweichung am Werkstück nicht gefährdet. Dies kann selbst bei langen Bearbeitungszeiten hohe Standzeiten des Verfahrens ermöglichen. Außerdem ist ein Vorsehen einer Rückhalteeinrichtung vergleichsweise einfach handhabbar, muss diese doch lediglich zwischen den Bereichen mit Lagerflüssigkeit und den Bereichen mit Kühlschmiermittel vorgesehen werden, was neben einer Bedienungserleichterung auch zu Kostenvorteilen führen kann. Zur Durchführung des Verfahrens ist beispielsweise eine 5-achsige Werkzeugmaschine vorstellbar. Eine Rückhalteeinrichtung kann im Allgemeinen verstanden werden, wobei dazu jegliche Ausgestaltung denkbar sind. So ist ein Druckluftvorhang genauso vorstellbar, wie beispielsweise eine flüssigkeitsdichte Platte. Entscheidend ist, dass die Rückhalteeinrichtung derart an der Werkzeugmaschine vorgesehen ist, dass wenigstens beim Bearbeiten der Form- und/oder Lageabweichung des Werkstücks das Kühlschmiermittel die Lagerflüssigkeit im Wesentlichen nicht kontaminiert. Solch eine Kontamination kann beispielsweise durch ein Vermischen der beiden unterschiedlichen Flüssigkeiten und/oder, insbesondere bei gleichen Flüssigkeiten, ein Eintrag von Verunreinigungen darstellen. Im Allgemeinen sei noch erwähnt, dass das Kühlschmiermittel als Mittel zum Schmieren und/oder Kühlen zu verstehen ist. Das Verfahren kann vereinfacht werden, wenn die Rückhalteeinrichtung ein Vermischen von Kühlschmiermittel mit Lagerflüssigkeit verhindert. Außerdem können so Verunreinigungen von der Lagerflüssigkeit bzw. dem hydrostatischen Lager auf einfache Weise fern gehalten werden, was zusätzlich die Standfestigkeit des Verfahrens erhöhen kann.

Eine verbesserte Bedienbarkeit des Verfahrens kann sich ergeben, wenn die Lünette am Schrägbett der Werkzeugmaschine befestigt wird. Außerdem kann durch die vorteilhafte Zugänglichkeit aufgrund des Schrägbetts ein schnelles Verfahren geschaffen werden, weil dieses Schrägbett auch eine besonders einfache Wartbarkeit der Rückhalteeinrichtung ermöglichen kann.

Verbesserte Verfahrensbedingungen zur Reduktion der Form- und/oder Lageabweichung können weiter geschaffen werden, wenn am eingespannten Werkstück die Form- und/oder Lageabweichung gemessen und an Hand der gemessenen Abweichung die Anstellung der Lünette an das Werkstück angepasst wird. Eine eventuelle Abweichung der Zentralachse bzw. Achse des Werkstücks gegenüber der Drehachse der Werkstückspanneinrichtung der Werkzeugmaschine kann so durch Überreinstimmung der Achsen auf einfache Weise kompensiert werden. Selbst bei eingespanntem Werkstück sind daher auch vorteilhaft Verfahrensparameter anpassbar, so dass die Probleme im Zuge eines eventuellen Ausspannens und Messens am Werkstück vermieden werden können. Beim erfindungsgemäßen Verfahren können so unterschiedliche Spannsituationen des Werkstücks ausgeschlossen werden, die auf eine Genauigkeit in der Bearbeitung des Rundlaufs des Werkstücks Einfluss nehmen können.

Insbesondere kann eine verbesserte Reduktion von einer Form- und/oder Lageabweichung eintreten, wenn die Anstellung der Lünette an das Werkstück derart erfolgt, dass im Bearbeitungsbereich des Werkstücks durch das Werkzeug die Achse des Werkstücks mit der Drehachse der Werkzeugmaschine übereinstimmt. Besonders einfache Bearbeitungsvoraussetzungen für die Werkzeugmaschine können so außerdem ermöglicht werden.

Erfolgt durch wiederholte Messdatenerfassung die Anstellung der Lünette an das Werkstück kontinuierlich, dann eröffnet sich die Möglichkeit, eine sich automatisch abgleichende Werkzeugmaschine zu schaffen. Neben vereinfachten Verfahrensbedingungen kann dies kontinuierlich auch für eine verbesserte Reduktion einer Form-und/oder Lageabweichung sorgen. Eine derartige dynamische Anpassung kann beispielsweise in Echtzeit erfolgen, was über eine Ansteuerung von Aktoren zum Verstellen der Lage der Stellglieder auf einfache Weise ermöglicht werden kann.

Um die Genauigkeit des Verfahrens zu verbessern, kann vorgesehen werden, dass das Werkstück vor einem Lagern des Werkstücks auf der Lünette - insbesondere auf der werkstückseitigen Lagerfläche - geschliffen wird. Durch diesen Verfahrensschritt des Schleifens kann im Bereich der hydrostatischen Lagerung des Werkstücks ein besonderer Rundlauf vorgegeben werden, um damit an anderen Stellen des Werkstücks höchsten Voraussetzungen für einen präzisen Rundlauf, präzise Rundheit oder präzise Zylindrizität genügen zu können. Vorteilhaft wird dieses Schleifen von der 5-achsigen Werkzeugmaschine durchgeführt, wenn das Werkstück eingespannt ist und bevor die Lünette das Werkstück abstützt.

Stützen sich die obere und untere Werkstückhälfte an der Lünette ab, so sind vergleichsweise hohe Anstellkräfte auf die untere Werkstückhälfte möglich, sodass selbst hohe Durchbiegungen von der Lünette abgetragen bzw. kompensiert werden können. Dadurch kann auch die Genauigkeit in der Bearbeitung der Form- und/oder Lageabweichung des Werkstücks weiter verbessert bzw. können damit vergleichsweise schwere Werkstücke bearbeitet werden. Außerdem kann durch die obere Abstützung eine virtuelle Erhöhung der Werkstückmasse ermöglicht werden, was beispielsweise zu verbesserten Verhältnissen des hydrostatischen Schmierfilms des Lagers genützt werden kann, um beispielsweise dessen nichtlineares Verhalten kompensieren zu können.

Die Erfindung hat sich außerdem die Aufgabe gestellt, eine Werkzeugmaschine der eingangs geschilderten Art derart zu verbessern, dass trotz vereinfachter Konstruktionsbedingungen höchsten Bearbeitungsanforderungen gefolgt werden kann. Außerdem soll die Werkzeugmaschine standfest und kostengünstig sein.

Die Erfindung löst die gestellte Aufgabe dadurch, dass die Werkzeugmaschine einen am Träger der Lünette befestigte Rückhalteeinrichtung zur Vermeidung einer Kontamination der Lagerflüssigkeit durch das Kühlschmiermittel aufweist, welche flüssigkeitsdichte Rückhalteeinrichtung wenigstens teilweise am Werkstück insbesondere über eine elastische Dichtung anliegt, wobei wenigstens der Träger und die Rückhalteeinrichtung eine das hydrostatische Lager umfassende Abschottung ausbilden.

Weist die Werkzeugmaschine eine Rückhalteeinrichtung zur Vermeidung einer Kontamination der Lagerflüssigkeit durch das Kühlschmiermittel auf, dann kann sich die Möglichkeit eröffnen, trotz Bearbeitung des Werkstücks unter Beaufschlagung von Kühlschmiermittel stets eine präzise hydrostatische Lagerung des Werkstücks sicherzustellen, so dass von einem eingespannten Werkstück seine Form-und/oder Lageabweichung standfest reduziert werden kann. Durch die erfindungsgemäße Lösung des Vorsehens einer Rückhalteeinrichtung kann daher auch eine präzise Lagerung des Werkstücks auch dann ermöglicht werden, wenn der Bearbeitungsbereich am Werkstück nah an die Lünette heranreicht. Der konstruktiven Einfachheit halber kann die Rückhalteeinrichtung am Träger der Lünette befestigt sein. Die erfindungsgemäße Werkzeugmaschine kann so höchsten Bearbeitungsanforderungen folgen und ist außerdem aufgrund der standfesten hydrostatischen Lagerung äußerst präzise in der Reduktion von Form- und/oder Lageabweichungen. Außerdem ist eine Rückhalteeinrichtung vergleichsweise konstruktiv einfach und erlaubt so eine vergleichsweise kostengünstige Werkzeugmaschine. Um die Lagerflüssigkeit gegenüber dem Kühlschmiermittel schützen zu können, kann vorgesehen sein, dass die flüssigkeitsdichte Rückhalteeinrichtung wenigstens teilweise am Werkstück anliegt. Durch das Anliegen der Rückhalteeinrichtung kann außerdem auf einfache Weise ein Eindringen von Spänen in den Lagerbereich der Schale vermieden werden, was zusätzlich die Standfestigkeit der Lünette und damit der Werkzeugmaschine verbessern kann. Um Beschädigungen des Werkstücks auf einfache Weise vermeiden zu können, liegt die Rückhalteeinrichtung über eine elastische Dichtung am Werkstück an. Bilden wenigstens der Träger und die am Träger befestigte Rückhalteeinrichtung eine das hydrostatische Lager umfassende Abschottung aus, dann kann das hydrostatische Lager auf einfache Weise gegenüber Spänen und Kühlschmiermittel abgeschottet werden. Die so geschaffene besonders standfeste Lünette kann somit auch bei langen Betriebszeiten die Bearbeitungsanforderungen an die Werkzeugmaschine nicht beeinträchtigen, was die Erfindung gegenüber dem Stand der Technik besonders auszeichnen kann.

Ist die das hydrostatische Lager aufweisende Schale über ein Gelenklager mit dem Träger der Lünette verbunden, dann kann sich eine verbesserte Anpassung des hydrostatischen Lagers an die Kontur des Werkstücks ergeben. Neben dem Vorteil, einen Austritt an Hydraulikflüssigkeit aus dem Lager zu reduzieren, kann auch die Gefahr einer Berührung der Schale mit dem Werkstück im Bereich des hydrostatischen Lagers vermindert werden. Beschädigung des Werkstücks bzw. auch der Lünette können so vermieden werden, was eine besonders standfeste Vorrichtung schaffen kann. Hinzu kommt, dass damit auch die Funktion der Rückhalteeinrichtung verbessert werden kann. Ist nämlich die Rückhalteeinrichtung an der Schale befestigt, dann kann durch die Beweglichkeit der Schale aufgrund des Gelenklagers ein mitgeführter Anschluss der Rückhalteeinrichtung an das Werkstück geschaffen werden. Auf konstruktiv einfache Weise kann so eine Kontamination der Lagerflüssigkeit durch das Kühlschmiermittel standfest verhindert werden, was die Werkzeugmaschine gegenüber dem Stand der Technik besonders auszeichnen kann.

Ist das auf der Seite des dem Schrägbett zugewandten Trägers vorgesehene Stellglied mit einem Winkelantrieb verbunden, dann kann sich eine vereinfachte Konstruktionsbedingung der Lünette im Schrägbettbereich der Werkezugmaschine ergeben. Das Gehäuse der Lünette kann daher auch in diesem Bereich vergleichsweise schlank ausgeführt werden, um damit vergleichsweise große Werkstücke abstützen zu können. Außerdem können sich mit einem Winkelantrieb erhöhte Freiheiten im Anordnen der Betätigungseinrichtungen zu den Stellgliedern gegeben, was die Konstruktionsanforderungen an die Lünette noch weiter vereinfachen kann.

Schafft eine Schale der Lünette an der oberen Werkstückhälfte eine Abstützung, so können damit erhöhte Abstützkräfte auf die Unterseite des Werkstücks wirken, ohne dass eine instabile Lagerung des Werkstücks in der Werkzeugmaschine in Kauf genommen werden muss. Damit können beispielsweise hohe Durchbiegungen des Werkstücks von der Lünette kompensiert werden, was zu einer erhöhten Reduktion der Form- und/oder Lageabweichung führen kann.

Weist die Werkzeugmaschine einen Sensor zur Aufnahme, von einer Anstellkraft einer Schale an das Werkstück abhängiger Messdaten und eine mit dem Sensor datenverbundene Recheneinheit zur Berechnung der Anstellkraft der Schale an das Werkstück auf, dann können Einstellfehler der Lünette gegenüber dem Werkstück auf einfache Weise vermieden werden. Außerdem kann das Werkstück gegenüber erhöhten Lagerbelastungen bzw. gegenüber einer instabilen Lagerung auf der Lünette geschützt werden, wodurch sich die Werkzeugmaschine ebenso gegenüber dem Stand der Technik auszeichnen kann.

In den Figuren ist der Erfindungsgegenstand anhand von Ausführungsbeispielen beispielsweise dargestellt. Es zeigen
- Fig. 1: eine aufgerissene Seitenansicht auf eine Lünette einer Werkzeugmaschine mit einer Rückhalteeinrichtung,
- Fig. 2: eine Frontansicht auf die Werkzeugmaschine nach Fig. 1,
- Fig. 3: eine vergrößerte Teilansicht auf die Lünette nach Fig. 1 und
- Fig. 4: eine Ansicht nach Fig. 3 mit elektronischen Bauteilen.

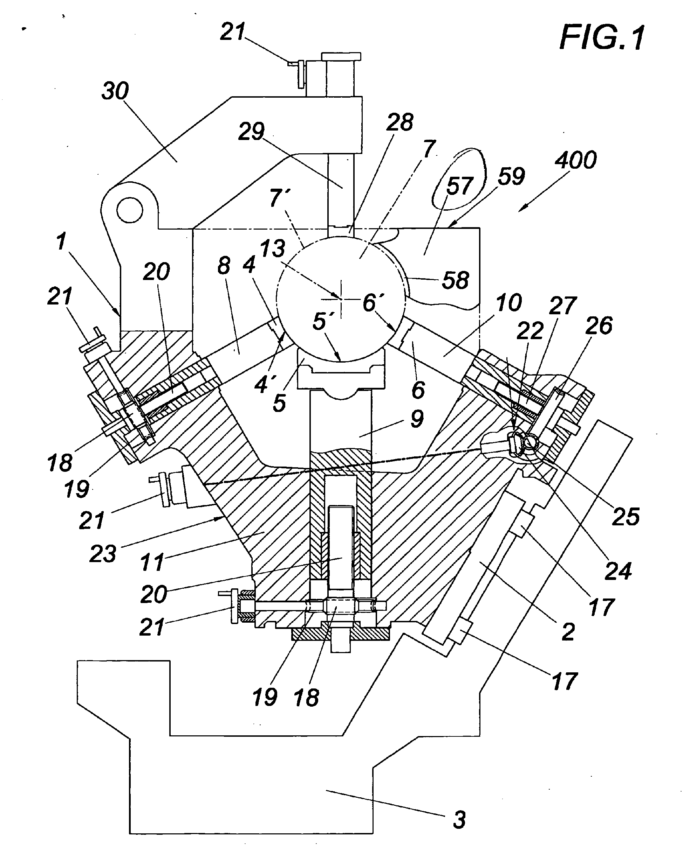

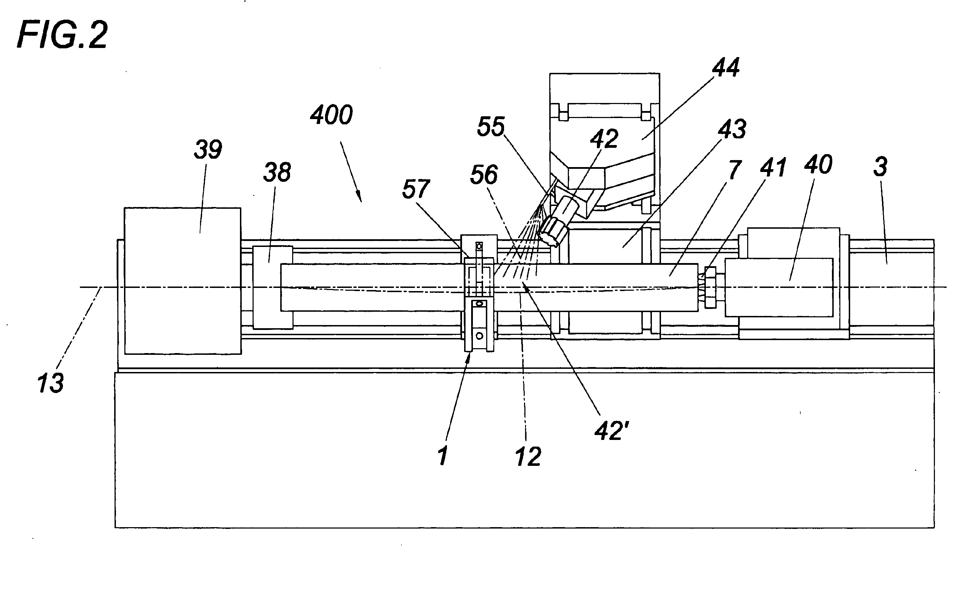

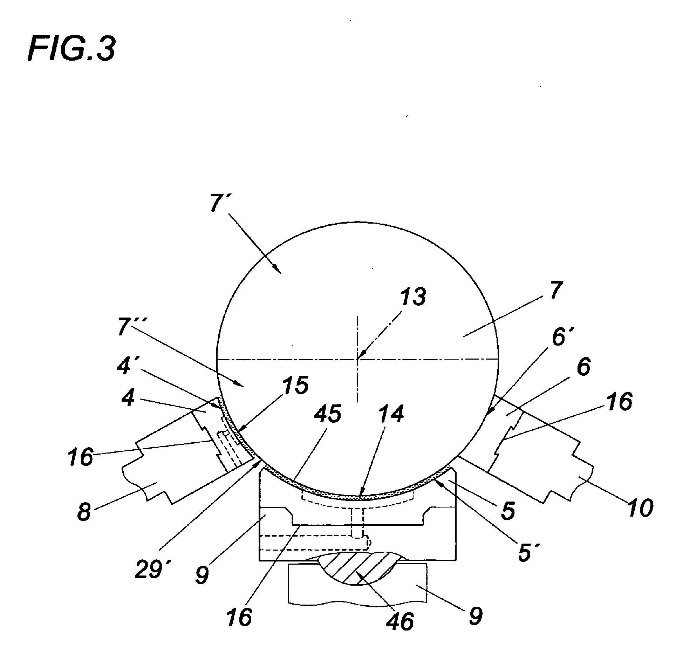

Die beispielsweise nach Fig. 1 dargestellte Lünette 1 ist auf einem Schlitten 2 befestigt, der entlang der Längsstreckung eines Schrägbetts 3 einer Werkzeugmaschine 400 verschiebbar auf Schienen 17 gelagert ist. Die Lünette 1 weist drei Schalen 4, 5 und 6 auf, die entsprechend der Kontur des eingespannten Werkstücks 7 gefertigte Lagerflächen 4', 5' und 6' bilden. Die Schalen 4, 5 und 6 sind über je ein Stellglied 8, 9 und 10 mit dem Träger 11 der Lünette 1 verbunden, sodass über die Schalen 4, 5 und 6 die Mitte des Werkstücks 7 selbst bei einer Durchbiegung der Zentralachse bzw. Achse 12 des Werkstücks 7 in die Drehachse 13 der Werkzeugmaschine 400 gebracht werden kann. Solch eine Durchbiegung -ohne Abstützung durch die Lünette 1- ist überzogen dargestellt der Fig. 2 zu entnehmen. Um äußerst präzise eine Rundlaufabweichung am Werkstück 7 reduzieren zu können, wird zwischen der Schale 5 und dem Werkstück 7 ein hydrostatisches Lager 14 vorgesehen, was der Fig. 3 besser entnommen werden kann. Durch diese hydrostatische Lagerung des Werkstücks 7 über eine Lagerflüssigkeit 45 kann außerdem eine Beschädigung des Werkstücks 7, was sich beispielsweise in Schleifspuren äußern kann, vermieden werden. Weiter ist, wie insbesondere in Fig. 2 erkannt werden kann, eine Zuführeinrichtung 55 an der Werkzeugmaschine 400 vorgesehen, über welche Zuführeinrichtung 55 ein Kühlschmiermittel 56 auf den vom Werkzeug 42 bearbeiteten Bereich 42' am Werkstück 7 aufgebracht werden kann, um diesen Bereich 42' zu kühlen und/oder zu schmieren. Um damit jedoch die Standfestigkeit des hydrostatischen Lagers 14 nicht zu vermindern, ist am Träger 11 der Lünette 1 eine Rückhalteeinrichtung 57 befestigt. Die flüssigkeitsdichte Rückhalteeinrichtung 57 ist plattenförmig ausgeführt, jedoch sind jegliche andere Ausgestaltungen denkbar. Über diese Rückhalteeinrichtung 57 kann nun eine Vermischung von Lagerflüssigkeit 45 des Lagers 14 und Kühlschmiermittel 56 der Zuführeinrichtung 55 vermieden werden, so dass es trotz vergleichsweise langer Bearbeitungszeiten beim Bearbeiten im Bereich der Lünette 1 mit keinem nachteiligen Einfluss in der Reduktion einer Form-und/oder Lageabweichung gerechnet werden muss. Sohin kann erfindungsgemäß eine standfeste Werkzeugmaschine 400 geschaffen werden.

Von den beiden seitlichen Schalen 4 und 6 weist beispielsweise die Schale 4 ebenso ein hydrostatisches Lager 15 auf, wobei die aus einem Weichmetall (bzw. anderen Gleitlagermaterialen z.B. Kunststoffe etc.) gefertigte Schale 6 am Werkstück 7 anliegend vorgesehen ist. Die Schalen 4 und 6 dienen zur Fixierung der Mitte des Werkstücks 7. Es ist aber auch vorstellbar, die Schale 5 wegzulassen und die Abstützung lediglich über die Schalen 4 und 6 zu ermöglichen, wobei in diesem Fall nur beispielsweise vorgeschlagen wird, die beiden Schalen 4 und 6 mit einem hydrostatischen Lager 15 zu versehen, was nicht näher dargestellt worden ist. Andere Ausführungen, beispielsweise gemischter Funktionsart sind denkbar.

Die Schalen 4, 5 und 6 sind über Schwanzverbindungen 16 mit den Stellgliedern 8, 9 und 10 verbunden und damit vorteilhaft auswechselbar, was der Fig. 3 besonders deutlich entnommen werden kann. Die Stellglieder 8, 9 und 10 ermöglichen eine radiale Verstellung der Schalen 4, 5 und 6 in Richtung des Werkstücks 7, um damit für eine Abstützung der unteren Hälfte 7" des Werkstücks 7 bzw. eine Abstützung unterhalb der Schwerpunktlinie des Werkstücks 7 sorgen zu können. Die Stellglieder 8, 9 und 10 sind auf einem Träger 11 der Lünette 1 gelagert. Um eine Selbstsperrung der Position der Stellglied 8 und 9 zu erreichen, werden diese Stellglieder 8 und 9 über eine Schnecke 18 angetrieben, die auf ein Zahnrad 19 einer Gewindestange 20 wirkt. Die Gewindestange 20 sorgt nun für die jeweilige Verschiebung des jeweiligen Stellglieds 8 und 9 je nach Betätigung der Dreheinrichtung 21.

Engen Konstruktionsbedingungen, insbesondere im Bereich des Schrägbetts 3, kann auf einfache Weise bei der Ausbildung der Lünette 1 gefolgt werden, indem das Stellglied 10 über einen Winkelantrieb 22 betätigbar ist, was der Fig. 1 entnommen werden kann. Die Drehvorrichtung 21 kann so vergleichsweise unabhängig von der Lage des Stellglieds 10 an der Lünette 1 vorgesehen werden, insbesondere so auch an dem Schrägbett 3 gegenüberliegenden Trägerteil 23 der Lünette 1. Der Winkeltrieb 22 weist ein Kegelrad 24 auf, das im Eingriff mit einer Schnecke 25 steht, wobei die Schnecke 25 über das Zahnrad 26 für eine Drehung einer Gewindestange 27 sorgt, um das Stellglied 10 in Richtung des Werkstücks 7 radial verschieben zu können.

Des Weiteren schafft eine Schale 28 der Lünette 1 an der oberen Werkstückhälfte 7' zusätzlich eine Abstützung. Die Schale 28 ist über ein Stellglied 29 in Richtung des Werkstücks 7 verstellbar und auf dem Träger 11 über einen Schwenkarm 30 verschwenkbar gelagert. Durch die Schale 28 kann eine erhöhte Abstützung der unteren Werkstückhälfte 7" auf das Werkstück 7 aufgetragen werden.

Im Folgenden wird das erfindungsgemäße Verfahren zur Reduktion einer Form-und/oder Lageabweichung eines Werkstücks kurz beispielsweise beschrieben: Zuerst wird das Werkstück 7 in einer 5-achsigen Werkzeugmaschine 400 eingespannt. Nach Fig. 2 ist ersichtlich, dass das Werkstück 7 in eine Werkstückspannvorrichtung 38, beispielsweise in ein Futter, eines Werkstückspindelstocks 39 eingebracht wird. Es ist jedoch vorstellbar, dass mit zwei Lünetten lediglich über ein einwertiges Futter, welches Futter nur eine Drehung auf das Werkstück 7 überträgt, das Werkstück 7 eingespannt wird, was nicht näher dargestellt worden ist. Ein derartiges Futter kann beispielsweise eine Oldham Kupplung darstellen. Dann wird ein Reitstock 40 mit Zentrierspitzen 41 bei offener Werkstückspannvorrichtung 38 an das andere Werkstückende angedrückt und anschließend die Werkstückspannvorrichtung 38 geschlossen. Um die Neigung der Biegelinie 12 im Bereich der Werkstückspannvorrichtung 38, was zu einem schiefen Einspannen des Werkstücks 7 führen kann, zu kompensieren, wird vorgeschlagen, an die untere Seite des Werkstück 7 eine Anstellkraft vorzusehen, die Werkstückspannvorrichtung 38 zu öffnen und dann wieder zu schließen, was nicht dargestellt worden ist. Höchster Genauigkeit beim Einspannen des Werkstücks 7 kann so genügt werden. An das eingespannte Werkstück 7 kann in weitere Folge ein Werkzeug 42 angestellt werden, um den Bereich am Werkstück 7 vorzubereiten, an dem die Lünette 1 angreifen wird. Vorteilhaft wird dieser Bereich vom Werkzeug 42 der Werkzeugmaschine 400 geschliffen, um das Verfahren zur Reduktion der Form- und/oder Lageabweichung, insbesondere der Rundlaufabweichung besonders zu verbessern. Das Werkzeug 42 ist über einen am Schrägbett 3 auf einem Schlitten 43 gelagerten Werkzeughalter 44 geführt.

Nach dieser Bearbeitung wird das Werkstück 7 gedreht und über wenigstens eine Schale 4, 5 oder 6 einer am Schrägbett 3 der Werkzeugmaschine 400 befestigten Lünette 1 abgestützt. Um eine besonders genaue Abstützung des Werkstücks 7 zu ermöglichen, wird wenigstens beim Bearbeiten des Rundlaufs etc. des Werkstücks 7 zwischen wenigstens einer Schale 5 der Lünette 1 und dem Werkstück 7 eine Lagerflüssigkeit 45 für eine hydrostatische Lagerung 14 des Werkstücks 7 auf der Lünette 1 eingebracht. Vorteilhafte Dämpfungseigenschaften der hydrostatischen Lagerung 14 können so für eine hervorragende und präzise Reduktion einer Form-und/oder Lageabweichung am Werkstück 4 genützt werden. Um diese Vorteile der Lagerung jedoch standfest nützen zu können, muss erfindungsgemäß eine Vermischung von Kühlschmiermittel 56 und Lagerflüssigkeit 45 vermieden werden. Zu diesem Zweck wird wenigstens beim Bearbeiten der Form- und/oder Lageabweichung des Werkstücks 7 eine Rückhalteeinrichtung 57 vorgesehen. Nun kann unabhängig von der Lage der Lünette 1 gegenüber der Zuführeinrichtung 55 bzw. des Werkzeugs 42 ein standfestes Verfahren mit höchsten Genauigkeiten ermöglicht werden.

Gemäß Fig. 3 ist zu erkennen, dass die Schale 5 mit dem hydrostatischen Lager 14 über ein Gelenklager 46 mit dem Träger 11 verbunden ist. Zu diesem Zweck ist dieses Lager 14 im Verlauf des Stellglieds 9 vorgesehen. Durch die sphärischen Lagerflächen des Gelenklagers 46 kann eine hohe Beweglichkeit der Schale 5 ermöglicht werden, so dass sich eine besonders anpassbare hydrostatische Lagerung des Werkstücks 7 auf der Lünette 1 einstellen kann. Außerdem ist ein derartiges Gelenklager 46 vergleichsweise robust, so dass damit auch eine standfeste Werkzeugmaschine 400 geschaffen werden kann. Derartige sphärische Lagerflächen können beispielsweise einen halbkugelförmigen Verlauf aufweisen.

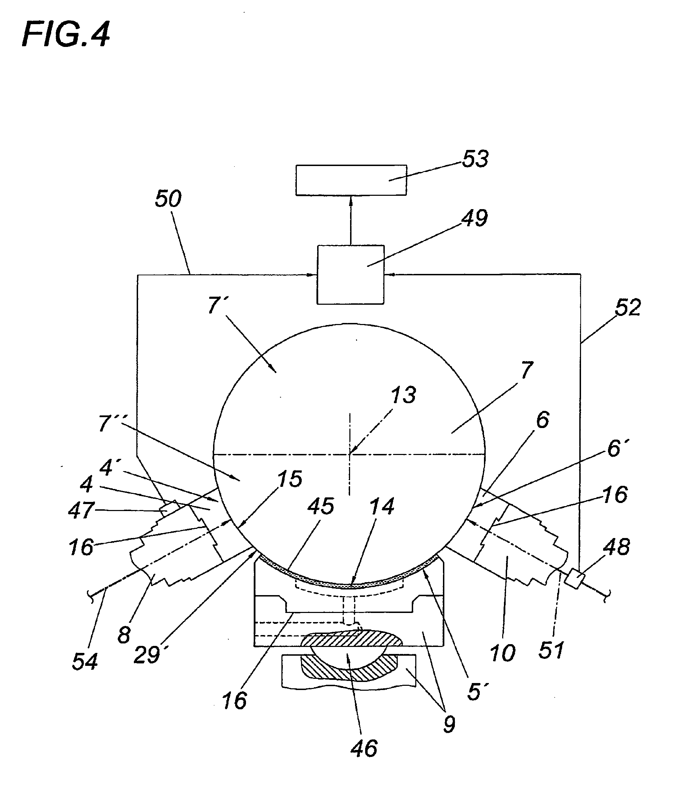

Die Werkzeugmaschine 400 weist gemäß Fig. 4 zwei Sensoren 47, 48 auf. Der Sensor 47 nimmt beispielsweise Biegebelastungen des Stellglieds 8 auf, um damit Messdaten zur Aufnahme der Anstellkraft der Schale 4 der Recheneinheit zur Verfügung stellen zu können. Zu diesem Zweck ist der Sensor 47 über eine Datenleitung 50 mit der Recheneinheit 49 verbunden. Alternativ vorstellbar ist, wie zum Stellglied 10 dargestellt, dass anhand der Flüssigkeit, die dem hydrodynamischen Gleitlager der Schale 6 zugeführt wird, auf die Anstellkraft der Schale 6 rückgeschlossen wird. Zu diesem Zweck wird in der Versorgungsleitung 51 für die Flüssigkeit des hydrodynamischen Gleitlagers ein Sensor 48 zur Mengenmessung der Flüssigkeit vorgesehen. Diese Sensor 48 ist ebenso über eine Datenleitung 52 mit der Recheneinheit 49 verbunden. Über die Recheneinheit 49 kann nun die Berechnung der Anstellkraft der jeweiligen Schale 4 und 6 an das Werkstück 7 erfolgen, wobei das Ergebnis auf einer Anzeige 53 dargestellt wird und/oder zur Ansteuerung der Verstellmechanismen der Stellglieder 8 bzw. 10 verwendet werden kann, wodurch sich ein Regelkreis schaffen lässt, was nicht näher dargestellt worden ist. Der Sensor 48 kann aber auch in der Versorgungsleitung 54 für die Flüssigkeit des hydrodynamischen Gleitlagers der Schale 4 vorgesehen werden, wobei verschiedenste Kombinationen vorstellbar sind.

Außerdem ist vorstellbar, während der Bearbeitung über Messungen radial auf die Werkstückoberfläche (beispielsweise 720 Abtastungen pro Werkstückdrehung) mit einem Messtaster (Messuhr) und der Auswertung dieser Messdaten beispielsweise über einen nichtlinearen Fit mit kleinsten Fehlerquadraten (non linear LSQ) oder eine SVD (singular value decomposition) nach Moore Penrose (in einem Koeffizientenraum nach Grassmann (Punktraum)) die Rundlaufabweichung parallel bzw. synchron zu überwachen, was nicht dargestellt worden ist. Aus mehreren solchen Messungen kann auch die Reaktion der Lagerfilme und/oder das mechanische Bearbeitungsverhalten erfasst und im Bedarfsfall entsprechend gegengesteuert bzw. können zur Erreichung vorgegebener Sollwerte an der Werkzeugmaschine 400 automatisch Einstellungen vorgenommen werden.

Wie in den Figuren 1 und 2 erkannt werden kann, liegt die nur teilweise dargestellte Rückhalteeinrichtung 57 wenigstens teilweise am Werkstück 7 an, und zwar beispielsweise über eine elastische Dichtung 58. Ein dichter Abschluss gegenüber einem Eindringen von Kühlschmiermittel 56 oder auch eines Bearbeitungsabtrags vom Werkstück 7 in diesen Bereich der Lünette 1 kann so auf einfache Weise vermieden werden. Außerdem kann so eine vergleichsweise universal verwendbare Lünette 1 geschaffen werden. Vorteilhaft ist die Rückhalteeinrichtung 57 auf beiden Stirnseiten des hydrostatischen Lagers 14 abdeckend vorgesehen, was der Fig. 1 in teilweise aufgerissener Ansicht erkannt werden kann.

Um eine besonders standfesten Schutz zu schaffen, bildet der Träger 11, die am Träger 11 befestigte Rückhalteeinrichtung 57 und das Werkstück 7 eine das hydrostatische Lager 14 umfassende Abschottung 59 aus, wie dies in Fig. 1 andeutungsweise dargestellt wird. So ist der U-förmige Bereich der Lünette bzw. des Trägers abgeschottet, wobei das Stellglied 29 und/oder die Schale 28 durch diese Abschottung 59 ragt.

## Patentansprüche

1. Verfahren zur Reduktion von einer Form- und/oder Lageabweichung, insbesondere einer Rundlaufabweichung eines Werkstücks (7), bei dem das Werkstück (7) in einer Werkzeugmaschine (400) eingespannt, gedreht und über wenigstens eine Schale (4, 5, 6) mindestens einer, an der Werkzeugmaschine (400) befestigten Lünette (1) abgestützt und über ein Werkzeug (42) der Werkzeugmaschine (400) unter einer wenigstens teilweisen Beaufschlagung von Kühlschmiermittel bearbeitet wird, wobei wenigstens beim Bearbeiten der Form-und/oder Lageabweichung des Werkstücks (7) zwischen wenigstens einer Schale (5) der Lünette (1) und dem Werkstück (7) eine Lagerflüssigkeit (45) für eine zumindest teilweise hydrostatische Lagerung des Werkstücks (7) eingebracht wird, **dadurch gekennzeichnet, dass** wenigstens beim Bearbeiten der Form- und/oder Lageabweichung des Werkstücks (7) eine flüssigkeitsdichte Rückhalteeinrichtung (57) zur Vermeidung einer Kontamination der Lagerflüssigkeit (45) durch ein Vermischen mit Kühlschmiermittel (56) vorgesehen wird, wobei diese Rückhalteeinrichtung (57) wenigstens teilweise am Werkstück (7) insbesondere über eine elastische Dichtung (58) anliegt, am Träger (11) der Lünette (1) befestigt ist und wenigstens mit dem Träger (11) eine das hydrostatische Lager (14) umfassende Abschottung (59) ausbildet.

2. Verfahren nach Anspruch 1, **dadurch gekennzeichnet, dass** die Lünette (1) am Schrägbett (3) der Werkzeugmaschine (400) befestigt wird.

3. Verfahren nach Anspruch 1, **dadurch gekennzeichnet, dass** am eingespannten Werkstück (7) die Form-und/oder Lageabweichung gemessen und anhand der gemessenen Abweichung die Anstellung der Lünette (1) an das Werkstück (7) verändert wird.

4. Verfahren nach Anspruch 3, **dadurch gekennzeichnet, dass** die Anstellung der Lünette (1) an das Werkstück (7) derart erfolgt, dass im Bearbeitungsbereich (42') des Werkstücks (7) durch das Werkzeug (42) die Achse (12) des Werkstücks (7) mit der Drehachse (13) der Werkzeugmaschine (400) übereinstimmt.

5. Verfahren nach einem der Ansprüche 1 bis 4, **dadurch gekennzeichnet, dass** durch wiederholte Messdatenerfassung die Anstellung der Lünette (1) an das Werkstück (7) kontinuierlich angepasst wird.

6. Verfahren nach einem der Ansprüche 1 bis 5, **dadurch gekennzeichnet, dass** vor einem Lagern des Werkstücks (7) auf der Lünette (1) das Werkstück (7) geschliffen wird.

7. Verfahren nach einem der Ansprüche 1 bis 6, **dadurch gekennzeichnet, dass** sich die obere und die untere Werkstückhälfte (7', 7") an der Lünette (1) abstützen.

8. Werkzeugmaschine mit einem Werkstück (7), mit einem zum Bearbeiten des Werkstücks (7) vorgesehenen Werkzeug (42), mit einer Zuführeinrichtung (55) an Kühlschmiermittel (56) zum Kühlen und/oder Schmieren wenigstens teilweise des vom Werkzeug (42) bearbeiteten Bereichs am Werkstück (7), mit einem insbesondere als Schrägbett (3) ausgeführten Maschinenbett, mit einer insbesondere über einen Schlitten (17) am Maschinenbett befestigten Lünette (1), die einen Träger (11) und wenigstens eine Schale (4, 5, 6) zur Lagerung des zu bearbeitenden Werkstücks (7) aufweist, mit wenigstens einem zwischen einer Schale (5) und dem Werkstück (7) vorgesehenen hydrostatischen Lager (14) zur Abstützung des Werkstücks (7) über die Hydraulikflüssigkeit des Lagers (14), **dadurch gekennzeichnet, dass** die Werkzeugmaschine (400) eine am Träger (11) der Lünette (1) befestigte Rückhalteeinrichtung (57) zur Vermeidung einer Kontamination der Lagerflüssigkeit (45) durch das Kühlschmiermittel (56) aufweist, welche flüssigkeitsdichte Rückhalteeinrichtung (57) wenigstens teilweise am Werkstück (7) insbesondere über eine elastische Dichtung (58) anliegt, wobei wenigstens der Träger (11) und die Rückhalteeinrichtung (57) eine das hydrostatische Lager (14) umfassende Abschottung (59) ausbilden.

9. Werkzeugmaschine nach Anspruch 8, **dadurch gekennzeichnet, dass** die das hydrostatische Lager (14) aufweisende Schale (5) über ein Gelenklager (46) mit dem Träger (11) der Lünette (1) verbunden ist.

10. Werkzeugmaschine nach einem der Ansprüche 8 bis 9, **dadurch gekennzeichnet, dass** das auf der Seite des dem Schrägbett (3) zugewandten Trägers (11) vorgesehene Stellglied (10) mit einem Winkelantrieb (22) verbunden ist.

11. Werkzeugmaschine nach einem der Ansprüche 8 bis 10, **dadurch gekennzeichnet, dass** eine Schale (28) der Lünette (1) an der oberen Werkstückhälfte (7') eine Abstützung schafft.

12. Werkzeugmaschine nach einem der Ansprüche 8 bis 11, **dadurch gekennzeichnet, dass** die Werkzeugmaschine (400) einen Sensor (47, 48) zur Aufnahme, von einer Anstellkraft einer Schale (4, 6) an das Werkstück (7) abhängiger Messdaten und eine mit dem Sensor (47, 48) datenverbundene Recheneinheit (49) zur Berechnung der Anstellkraft der Schale (4, 6) an das Werkstück (7) aufweist.

## Claims

1. A method for reducing deviations in shape and/or position, in particular in the run-out deviations of a workpiece (7), by which the workpiece (7) is clamped and turned in a machine tool (400), and supported by means of at least one shell (4, 5, 6) of at least one steady rest (1) fixed to the machine tool (400) and is machined by a tool (42) of the machine tool (400) under at least partial application of a cooling lubricant, wherein at least during machining of the shape and/or position deviations of the workpiece (7) a storage liquid (45) is introduced between at least one shell (5) of the steady rest (1) and the workpiece (7) to provide at least partial hydrostatic bearing of the workpiece (7), **characterised in that**, at least during machining of the shape and/or position deviations of the workplace (7), a liquid-tight restraining device (57) is provided to prevent contamination of the bearing fluid (45) by mixing with cooling lubricant (56), wherein this restraining device (57) is in contact at least partially with the workpiece (7) in particular via an elastic seal (58), is fixed to the holder (11) of the steady rest (1) and forms, at least with the holder (11), a hydrostatic bearing (14) encompassing separation (59).

2. Method according to claim 1, **characterised in that** the steady rest (1) is attached on the slant bed (3) of the machine tool (400).

3. Method according to claim 1, **characterised in that** the shape and/or position deviations are measured on the clamped workpiece (7) and the engagement of the steady rest (1) on the workpiece (7) is adjusted according to the measured deviations.

4. Method according to claim 3, **characterised in that** the engagement of the steady rest (1) on the workpiece (7) is such that in the machining area (42') of the workpiece (7) by the tool (42), the axis (12) of the workpiece (7) matches the axis of rotation (13) of the machine tool (400).

5. Method according to one of claims 1 to 4, **characterised in that** by repeated measurement data acquisition the engagement of the steady rest (1) on the workpiece (7) is continuously adapted.

6. Method according to one of claims 1 to 5, **characterised in that** the workpiece (7) is grinded before positioning of the workpiece (7) on the steady rest (1).

7. Method according to one of the claims 1 to 6, **characterised in that** the upper and lower half of the workpiece (7', 7") are supported on the steady rest (1).

8. Machinetool with a workpiece (7) and a tool (42) provided to machine the workpiece (7), with a feeder unit (55) of cooling lubricant (56) to cool and/or to lubricate, at least partially, the area of the workpiece (7) that are being machined by the tool (42), with a in particular as a slant bed (3) arranged machine bed, with a in particular via a carriage (17) on the machine attached bed steady rest (1), which comprises a holder (11) and at least one shell (4, 5, 6) for bearing the workpiece (7) to be machined, with at least one hydrostatic bearing (14) provided between one shell (5) and the workpiece (7) for supporting the workpiece (7) via the hydraulic fluid of the bearing (14), **characterised in that** the machine-tool (400) comprises a restraining device (57) fixed to the holder (11) of the steady rest (1) for prevention of contamination of the bearing fluid (45) by the cooling lubricant (56), which fluid-tight restraining device (57) makes contact at least partially with the workpiece (7) in particular via an elastic seal (58), wherein at least the holder (11) and the restraining device (57) form a hydrostatic bearing (14) encompassing separation (59).

9. A machine tool according to claim 8, **characterised in that** the shell (5) comprising the hydrostatic bearing (14) is connected via a spherical plain bearing (46) to the support (11) of the steady rest (1).

10. A machine tool according to one of the claims 8 to 9, **characterised in that** the actuating element (10), provided on the side of the carrier (11) facing the slant bed (3), is connected with an angle drive (22).

11. A machine tool according to one of claims 8 to 10, **characterised in that** a shell (28) of the steady rest (1) provides a support on the top half of the workpiece (7').

12. A machine tool according to one of claims 8 to 11, **characterised in that** the machine tool (400) has a sensor (47, 48) for acquisition of measurement data depending of an adjustment force of a shell (4, 6) on the workpiece (7) and a processing unit (49) connected with the sensor (47, 48) to receive data for the calculation of the adjustment force of the shell (4, 6) on the workpiece (7).

## Revendications

1. Procédé de réduction d'un écart de forme et/ou de position, en particulier du faux-rond d'une pièce (7), selon lequel la pièce (7) est serrée dans une machine-outil (400), pivotée et soutenue au moyen d'au moins un coussinet (4, 5, 6) d'au moins une lunette (1) fixée sur la machine-outil (400), et est usinée au moyen d'un outil (42) de la machine-outil (400) avec une alimentation au moins partielle en lubrifiant réfrigérant, sachant qu'au moins lors de l'usinage de l'écart de forme et/ou de position de la pièce (7), un liquide de palier (45) est introduit entre au moins un coussinet (5) de la lunette (1) et la pièce (7) afin d'obtenir un palier hydrostatique au moins partiel pour la pièce (7), **caractérisé en ce que**, qu'au moins lors de l'usinage de l'écart de forme et/ou de position de la pièce (7), un dispositif de retenue (57) étanche aux liquides est prévu afin d'empêcher une contamination du liquide de palier (45) par un mélange avec le lubrifiant réfrigérant (56), sachant que ce dispositif de retenue (57) s'applique au moins partiellement contre la pièce (7) notamment par l'intermédiaire d'un joint d'étanchéité élastique (58), est fixé sur le support (11) de la lunette (1) et forme au moins avec le support (11) un cloisonnement (59) entourant le palier hydrostatique (14).

2. Procédé selon la revendication 1, **caractérisé en ce que** la lunette (1) est fixée sur le banc incliné (3) de la machine-outil (400).

3. Procédé selon la revendication 1, **caractérisé en ce que** l'écart de forme et/ou de position est mesuré sur la pièce serrée (7), et l'ajustement de la lunette (1) à la pièce (7) est modifié à l'aide de l'écart mesuré.

4. Procédé selon la revendication 3, **caractérisé en ce que** l'ajustement de la lunette (1) à la pièce (7) s'effectue de telle sorte que, dans la zone d'usinage (42') de la pièce (7) par l'outil (42), l'axe (12) de la pièce (7) coïncide avec l'axe de rotation (13) de la machine-outil (400).

5. Procédé selon l'une des revendications 1 à 4, **caractérisé en ce que** l'ajustement de la lunette (1) à la pièce (7) est adapté en continu par une acquisition répétée des données de mesure.

6. Procédé selon l'une des revendications 1 à 5, **caractérisé en ce que** la pièce (7) est rectifiée avant de monter la pièce (7) sur la lunette (1).

7. Procédé selon l'une des revendications 1 à 6, **caractérisé en ce que** les moitiés supérieure et inférieure (7', 7") de la pièce s'appuient sur la lunette (1).

8. Machine-outil, avec une pièce (7), avec un outil (42) prévu pour usiner la pièce (7), avec un dispositif d'alimentation (55) en lubrifiant réfrigérant (56) pour refroidir et/ou lubrifier au moins partiellement la zone de la pièce (7) usinée par l'outil (42), avec un banc de machine réalisé notamment sous forme de banc incliné (3), avec une lunette (1) qui est fixée notamment par l'intermédiaire d'un chariot (17) sur le ban de machine et qui présente un support (11) et au moins un coussinet (4, 5, 6) pour le soutien de la pièce (7) à usiner, et avec au moins un palier hydrostatique (14) prévu entre un coussinet (5) et la pièce (7) pour soutenir la pièce (7) au moyen du liquide hydraulique du palier (14), **caractérisée en ce que** la machine-outil (400) présente un dispositif de retenue (57) fixé sur le support (11) de la lunette (1) pour empêcher une contamination du liquide de palier (45) par le lubrifiant réfrigérant (56), lequel dispositif de retenue (57) étanche aux liquides s'applique au moins partiellement contre la pièce (7) notamment par l'intermédiaire d'un joint d'étanchéité élastique (58), sachant qu'au moins le support (11) et le dispositif de retenue (57) forment un cloisonnement (59) entourant le palier hydrostatique (14).

9. Machine-outil selon la revendication 8, **caractérisée en ce que** le coussinet (5) présentant le palier hydrostatique (14) est relié par l'intermédiaire d'un palier d'articulation (46) au support (11) de la lunette (1).

10. Machine-outil selon la revendication 8 ou 9, **caractérisée en ce que** l'organe de réglage (10) prévu sur le côté du support (11) tourné vers le banc incliné (3) est relié à un entraînement angulaire (22).

11. Machine-outil selon l'une des revendications 8 à 10, **caractérisée en ce qu'**un coussinet (28) de la lunette (1) crée un soutien au niveau de la moitié supérieure (7') de la pièce.

12. Machine-outil selon l'une des revendications 8 à 11, **caractérisée en ce que** la machine-outil (400) présente un capteur (47, 48) pour enregistrer des données de mesure dépendantes d'une force d'application d'un coussinet (4, 6) contre la pièce (7), et une unité de calcul (49) reliée en transmission de données au capteur (47, 48) pour calculer la force d'application du coussinet (4, 6) contre la pièce (7).
